# EUROPÄISCHE PATENTSCHRIFT

(11) **EP 3 599 390 B1**
(45) Veröffentlichungstag und Bekanntmachung des Hinweises auf die Patenterteilung: **22.11.2023**
(21) Anmeldenummer: 19187082.3
(22) Anmeldetag: 18.07.2019
(51) Int. Cl.: F16F 9/02, F16F 9/54, F16B 21/04, F16F 9/32, F16B 21/06

(54) **GASDRUCKFEDER MIT EINEM SCHNELLANSCHLUSS SOWIE MASCHINE ODER WERKZEUG MIT EINER GASDRUCKFEDER**
COMPRESSED GAS SPRING WITH A QUICK CONNECTION AND MACHINE OR TOOL COMPRISING A COMPRESSED GAS SPRING
RESSORT À GAZ DOTÉ D'UN RACCORD RAPIDE AINSI QUE MACHINE OU OUTIL DOTÉ D'UN RESSORT À GAZ

(30) Priorität: 24.07.2018 DE 102018117872
(43) Veröffentlichungstag der Anmeldung: 29.01.2020
(73) Patentinhaber: Steinel Normalien AG, 78056 Villingen-Schwenningen (DE)
(72) Erfinder: Elfers, Heinz, 78056 Villingen-Schwenningen (DE)
(74) Vertreter: Westphal, Mussgnug & Partner Patentanwälte mbB

(56) Entgegenhaltungen:
- DE-A1- 3 325 722
- DE-A1- 4 139 940
- DE-U1- 8 711 266
- FR-A1- 2 588 368
- JP-A- 2004 060 725
- US-A- 4 587 882
- US-A- 4 628 796
- US-A1- 2011 215 209

## Beschreibung

Die vorliegende Erfindung betrifft eine Gasdruckfeder mit einem Schnellanschluss mit den Merkmalen des Anspruchs 1 sowie eine Maschine oder ein Werkzeug mit wenigstens einer Gasdruckfeder mit den Merkmalen des Anspruchs 8.

Gasdruckfedern sind aus dem Stand der Technik in unterschiedlichen Ausgestaltungen vorbekannt und umfassen typischerweise ein zylindrisches Gehäuse mit einer Wandung, einem Bodenteil und einem eine Öffnung aufweisenden Deckel, sowie eine Längsachse, wobei in dem Gehäuse entlang der Längsachse ein Kolben mit einer Außenfläche, einer Druckseite und einer durch die Öffnung geführten Kolbenstange verschiebbar angeordnet ist. Zwischen der Druckseite des Kolbens und dem Bodenteil des Gehäuses ist eine Gaskompressionskammer gebildet. Derartige Gasdruckfedern werden insbesondere in Maschinen oder Werkzeugen eingesetzt, um Hubbewegungen entlang der Längsachse gefedert bzw. gedämpft durchzuführen.

Hierzu sind die Gasdruckfedern oftmals einzeln oder gruppiert in jeweils eine Gasdruckfederaufnahme an einer Maschine oder einem Werkzeug eingesetzt. Die Gasdruckfederaufnahme ist an die Außengeometrie der jeweiligen Gasdruckfeder angepasst und lagert die Gasdruckfedern krafteinleitend. In den Gasdruckfederaufnahmen werden die Gasdruckfedern typischerweise mit einer Schraubverbindung befestigt, durch die die Gasdruckfedern an einem Boden der Gasdruckfederaufnahme zur Krafteinleitung befestigt sind.

Zu Wartungszwecken oder zum Austausch der Gasdruckfeder muss die von der Gasdruckfeder abgewandte Seite der Gasdruckfederaufnahme zugänglich sein, um die Schraubverbindung zwischen der Gasdruckfeder und der Gasdruckfederaufnahme zu lösen. Oftmals ist eine Zugänglichkeit auf der von der Gasdruckfeder abgewandten Seite der Gasdruckfederaufnahme durch die Maschine oder das Werkzeug begrenzt, oder nur unter großem Aufwand möglich, so dass ein Wechsel oder eine Wartung der Gasdruckfeder mit einem erheblichen Aufwand verbunden ist.

Weiteren Stand der Technik bilden DE 33 25 722 A1, US 4 587 882 A, DE 87 11 266 U1, JP 2004 060 725 A und FR 2 588 368 A1.

Es ist daher die Aufgabe der vorliegenden Erfindung, eine Gasdruckfeder mit einem Schnellanschluss vorzuschlagen, welcher eine schnelle und einfache Montage oder Demontage der Gasdruckfeder an einer Maschine oder einem Werkzeug ermöglicht. Der Schnellanschluss der Gasdruckfeder soll vorzugsweise hohen Belastungen standhalten und gleichzeitig eine sichere Fixierung der Gasdruckfeder beim Betrieb des Werkzeugs oder der Maschine ermöglichen. Darüber hinaus soll eine haptische und/oder optische Rückmeldung generiert werden, durch die bei der Montage der Gasdruckfeder eine ordnungsgemäße Positionierung der Gasdruckfeder für den Monteur wahrnehmbar ist.

Die Lösung dieser Aufgabe erfolgt erfindungsgemäß durch eine Gasdruckfeder mit den Merkmalen des Patentanspruchs 1 sowie durch eine Maschine oder ein Werkzeug mit den Merkmalen des Patentanspruchs 8.

Vorteilhafte Ausgestaltungen und Weiterbildungen der Erfindung sind in den anhängigen Ansprüchen angegeben.

Die erfindungsgemäße Gasdruckfeder umfasst wenigstens einen Schnellanschluss aufweisend ein erstes Teil mit einem Stecker und wenigstens einer Nocke und ein zweites Teil mit einer Steckerausnehmung und mindestens einer Hinterschneidung. Der Stecker des ersten Teils und die Steckerausnehmung des zweiten Teils korrespondieren miteinander, wobei der Stecker in die Steckerausnehmung mit einem geringfügigen Spiel einsetzbar ist und durch eine Drehung des ersten Teils und des zweiten Teils um eine Längsachse relativ zueinander die wenigstens eine Nocke die mindestens eine Hinterschneidung zum formschlüssigen Verbinden nach Art eines Bajonettverschlusses in einer Winkellage hintergreift. Das erste Teil oder das zweite Teil ist weiter bevorzugt lösbar oder fest mit der Gasdruckfeder verbunden, währenddessen das korrespondierende zweite Teil oder erste Teil an einer Maschine oder an einem Werkzeug lösbar befestigt oder fest mit diesem verbunden ist, so dass zum formschlüssigen Verbinden der Gasdruckfeder mit dem Werkzeug oder der Maschine zunächst der Stecker mit der abstehenden Nocke durch eine Einführungsöffnung der Steckerausnehmung eingeführt und durch das Verdrehen des ersten Teils und des zweiten Teils in der Längsachse relativ zueinander eine formschlüssige Verbindung zwischen der Gasdruckfeder und der Maschine oder dem Werkzeug hergestellt wird. Durch die Herstellung eines solchen Formschlusses sind weitere Befestigungsmittel zum Montieren der erfindungsgemäßen Gasdruckfeder an einer Maschine oder an einem Werkzeug überflüssig, wodurch die Montage und Demontage der erfindungsgemäßen Gasdruckfeder an der Maschine oder dem Werkzeug erheblich vereinfacht ist und der Gestaltungsfreiraum seitens der Maschine oder dem Werkzeug erheblich vergrößert ist.

Die Erfindung sieht vor, dass wenigstens ein erstes Feststellmittel und wenigstens ein zweites Feststellmittel vorgesehen sind, und dass das wenigstens eine erste Feststellmittel und das wenigstens eine zweite Feststellmittel die Winkellage des ersten Teils und des zweiten Teils in der formschlüssigen Verbindung der wenigstens einen Nocke mit der mindestens einen Hinterschneidung arretieren. Oft werden Gasdruckfedern zyklisch beansprucht, so dass durch das erste Feststellmittel und das zweite Feststellmittel ein Lösen der formschlüssigen Verbindung zwischen dem ersten Teil und dem zweiten Teil verhindert ist.

Erfindungsgemäß umfasst das wenigstens eine zweite Feststellmittel eine elastisch bewegliche Rastnase, und das wenigstens eine erste Feststellmittel eine Rastaussparung, wodurch einerseits bei der Montage eine haptische Rückmeldung einer ordnungsgemäßen Montage, und andererseits eine belastbare Arretierung der Winkellage zwischen dem ersten Teil dem zweiten Teil erzeugt wird.

Erfindungsgemäß ist das zweite Feststellmittel wenigstens eine Federkugel. Federkugeln sind standardisierte Bauteile und zeichnen sich dadurch aus, dass die Rastverbindung zwischen dem ersten Teil und dem zweiten Teil durch eine vorbestimmte Kraft sowohl hergestellt, als auch gelöst werden kann. Darüber hinaus sind derartige Rastverbindungen als standardisierte Bauteile erhältlich.

Die Erfindung sieht vor, dass das wenigstens eine zweite Feststellmittel in der Steckerausnehmung angeordnet ist und dass das wenigstens eine zweite Feststellmittel in der Hinterschneidung in dem zweiten Teil angeordnet ist.

Erfindungsgemäß weist die wenigstens eine Nocke das wenigstens eine erste Feststellmittel auf auf und das erste Feststellmittel ist als Rastaussparung ausgebildet, wodurch sich eine besonders einfache Bauteilgeometrie ergibt.

Es ist vorteilhaft, wenn das wenigstens eine erste Feststellmittel und das wenigstens eine zweite Feststellmittel auf jeweils einer Stirnseite des ersten Teils oder einer Stirnseite des zweiten Teils angeordnet sind. Die beiden Stirnseiten sind dabei auf den jeweils zueinander gerichteten Seiten angeordnet und fixieren die Winkellage des ersten Teils und des zweiten Teils zueinander in der formschlüssigen Verbindung. Durch die Anordnung des wenigstens einen ersten Feststellmittels und des wenigstens einen zweiten Feststellmittels auf der jeweiligen Stirnseite kann die formschlüssige Verbindung zwischen dem ersten Teil und dem zweiten Teil besonders stabil ausgebildet werden.

Es ist weiterhin vorteilhaft, wenn die Steckerausnehmung mindestens zwei, beispielsweise vier, Hinterschneidungen aufweist, und weiterhin ist es vorteilhaft, wenn die Hinterschneidung umfangssymmetrisch zu einer Längsachse des ersten Teils und des zweiten Teils angeordnet und/oder ausgebildet ist. Während die umfangssymmetrische Anordnung die Positionierung der Hinterschneidnung relativ zu der Längsachse angibt, bezieht sich die umfangssymmetrische Ausgestaltung auf die Form der Hinterschneidung, bzw. der Stege, die die Hinterschneidung bilden. Diese können bei einer nicht umfangssymmetrischen Ausgestaltung unterschiedliche Formen aufweisen, wodurch eine Lageorientierung der Gasdruckfeder an der Maschine oder dem Werkzeug vorgegeben werden kann. Weiterhin ist es dabei vorteilhaft, wenn der Stecker mindestens zwei, beispielsweise vier, Nocken aufweist, und die Nocken ebenfalls weiterhin vorteilhaft an der Längsachse des ersten Teils und des zweiten Teils umfangssymmetrisch angeordnet und/oder ausgebildet sind. Dabei kann weiterhin vorteilhaft sein, wenn die Hinterschneidung in der Ausnehmung des zweiten Teils mit der Anzahl der Nocken an dem Stecker des ersten Teils in Form, Lage und/oder Anzahl korrespondieren.

Mindestens ein Anschlag kann an dem ersten Teil und/oder dem zweiten Teil vorgesehen sein, der eine relative Drehung des ersten Teils zu dem zweiten Teil beschränkt und die Winkellage vorgibt.

Eine weitere Ausgestaltung der vorliegenden Erfindung beinhaltet, dass mindestens ein Betätigungsmittel vorgesehen ist, durch das die Verbindung zwischen dem ersten Feststellmittel und dem wenigstens einen zweiten Feststellmittel gelöst werden kann. Durch das Betätigungsmittel kann die elastisch bewegliche Rastnase aus der Rastaussparung bewegt werden, wodurch die Fixierung der Winkellage zwischen dem ersten Teil und dem zweiten Teil aufgehoben ist.

Weiterhin vorteilhaft ist, wenn das erste Teil oder das zweite Teil mit einem Stößel oder einem Deckel verbunden ist. Weiterhin ist es vorteilhaft, wenn das erste Teil und/oder das zweite Teil mit dem Stößel oder dem Deckel einteilig ausgebildet ist. Der Deckel der Gasdruckfeder kann insbesondere einen Sensor zur Detektion wenigstens einer physikalischen Größe aufweisen, durch den eine Bestimmung einer zu erwartenden Restlebensdauer der Gasdruckfeder aus den mit dem wenigstens einem Sensor detektierten Werten aufweist. Dabei kann die Restlebensdauer in Abhängigkeit von den mit dem wenigstens einen Sensor detektierten Werten der wenigstens einen physikalischen Größe bestimmt werden, so dass die bislang erfolgte Verwendung, Belastung und oder Einbausituation der Gasdruckfeder bei der Bestimmung der Restlebensdauer berücksichtigt werden kann und somit eine individuelle Bestimmung der Restlebensdauer der Gasdruckfeder erfolgen kann.

Eine weitere vorteilhafte Ausgestaltung der vorliegenden Erfindung sieht vor, dass der Stecker und/oder die Steckerausnehmung Zentriermittel aufweisen. Das Zentriermittel ist eingerichtet, dass das erste Teil und das zweite Teil beim formschlüssigen Verbinden eine exakte koaxiale Ausrichtung des ersten Teils und des zweiten Teils zu der Längsachse gewährleisten. Dadurch kann eine exakte koaxiale Positionierung der Gasdruckfeder an der Maschine oder dem Werkzeug reproduzierbar bewerkstelligt werden, wodurch ungewollte Belastungen quer zu der Längsachse der Gasdruckfeder reduziert sind und die zu erwartende Lebensdauer aufgrund einer rein axialen Belastung der Gasdruckfeder erhöht ist.

Darüber hinaus betrifft die vorliegende Erfindung eine Maschine oder ein Werkzeug mit wenigstens einer erfindungsgemäßen Gasdruckfeder.

Weiterhin ist es vorteilhaft, wenn die Maschine oder das Werkzeug wenigstens eine Gasdruckfederaufnahme umfasst, in die das erste Teil oder das zweite Teil vollständig eingelassen ist. Die Gasdruckfederaufnahme ist bevorzugt an die Geometrie der Gasdruckfeder angepasst und weist weiter bevorzugt eine kreiszylindrische Form auf. An dem Boden ist das erste Teil oder das zweite Teil fest angeordnet, wobei zur Montage der Gasdruckfeder die Gasdruckfeder mit dem korrespondierenden zweiten Teil oder ersten Teil in die Gasdruckfederaufnahme eingesetzt wird und anschließend durch eine Drehung der Gasdruckfeder um die Längsachse in die Winkellage die formschlüssige Verbindung zwischen dem ersten Teil und dem zweiten Teil hergestellt wird.

Nachfolgend wird unter Bezugnahme auf die begleitenden Figuren ein erfindungsgemäßes Ausführungsbeispiele einer Gasdruckfeder im Detail erläutert. Es zeigen:
- Figur 1: eine teilweise geschnittene Darstellung eines ersten Ausführungsbeispiels der erfindungsgemäßen Gasdruckfeder mit einem Schnellanschluss, aufweisend ein erstes Teil und ein zweites Teil,
- Figur 2: eine geschnittene Darstellung der erfindungsgemäßen Gasdruckfeder gemäß Figur 1 in einer Gasdruckfederaufnahme einer Maschine oder eines Werkzeugs,
- Figur 3: eine perspektivische Darstellung des Schnellanschlusses mit einem ersten Teil und einem zweiten Teil gemäß den Figuren 1 und 2,
- Figur 4a: eine Draufsicht des ersten Teils gemäß den Figuren 1 und 2,
- Figur 4b: eine Seitenansicht des ersten Teils gemäß der Figur 4a,
- Figur 5a: eine Draufsicht des zweiten Teils gemäß den Figuren 1 und 2, und
- Figur 5b: eine Schnittansicht des zweiten Teils gemäß Figur 5a entlang der Schnittlinie B-B.

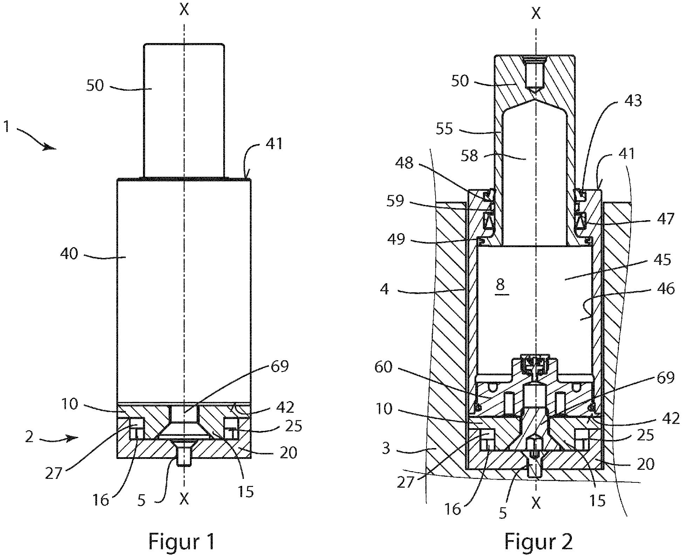

Figuren 1 und 2 zeigen eine Gasdruckfeder 1 gemäß einer erfindungsgemäßen Ausgestaltung mit einem Schnellanschluss 2. Die Gasdruckfeder 1 weist ein Gehäuse 40, einen Kolben 50 und einen Deckel 60 auf.

Das Gehäuse 40 ist in dem dargestellten Ausführungsbeispiel ein im Wesentlichen rotationssymmetrischer Körper mit einer ersten Seite 41 und einer zweiten Seite 42, der entlang einer Längsachse X-X ausgebildet ist. Das Gehäuse 40 weist weiterhin eine kreiszylindrische Zylinderbohrung 45 auf, die von der zweiten Seite 42 koaxial zu der Längsachse X-X in das Gehäuse 40 eingearbeitet oder eingeformt ist und eine Wandung 46 bildet. Auf der ersten Seite 41 des Gehäuses 40 ist koaxial zu der Längsachse X-X eine Öffnung 48 angeordnet.

Der Kolben 50 ist in der Zylinderbohrung 45 entlang der Längsachse X-X beweglich gehalten und korrespondiert mit der Form der Zylinderbohrung 45, wodurch der Kolben 50 an der Wandung 46 entlang der Längsachse X-X geführt ist. Der Kolben 50 umfasst weiterhin eine Kolbenstange 55, die die Öffnung 48 auf der ersten Seite 41 des Gehäuses 40 durchgreift und im dargestellten Ausführungsbeispiel mit einer zylindrischen Kammer 58 versehen ist, die zusammen mit der Zylinderbohrung 45, dem Kolben 50 und dem Deckel 60 eine Gaskompressionskammer 8 bildet. Der Kolben 50 und die Kolbenstange 55 können dabei einteilig oder mehrteilig ausgebildet sein.

Die Gaskompressionskammer 8 ist mit einem Gas befüllt, beispielsweise Stickstoff. Das Gas wird bei einer Bewegung des Kolbens 50 entlang der Längsachse X-X verdichtet, so dass sich in der Gaskompressionskammer 8 ein Druck aufbaut. Dieser Druck erzeugt eine Rückstellkraft, die gegen eine Druckseite des Kolbens 50 wirkt. Derartige Gasdruckfedern 1 werden insbesondere in Werkzeugen oder Maschinen 3 und dergleichen eingesetzt.

Um die Gaskompressionskammer 8 abzudichten, kann wie in dem dargestellten Ausführungsbeispiel in der Öffnung 48 eine Dichtung 47 vorgesehen sein, welche den Ringspalt zwischen der Öffnung 48 und dem Kolben 50 dichtet. Alternativ kann eine Dichtung am Kolben 50 umlaufend ausgebildet sein (nicht dargestellt). In der Öffnung 46 kann zusätzlich ein Abstreifer 43 zum Abstreifen von Schmutz vorgesehen sein.

Darüber hinaus ist sowohl in der Öffnung 48 als auch an dem Kolben 50 ein Führungsring 49, 59 angeordnet, durch den eine gleitende Lagerung des Kolbens 50 sowohl in der Zylinderbohrung 45 als auch in der Öffnung 48 bewerkstelligt ist.

Der Führungsring 49 ist auf einer Mantelfläche des Kolbens 50 in eine Radialnut eingesetzt und dort fest angeordnet, während dessen der Führungsring 59 in einer Radialnut in der Öffnung 48 des Gehäuses 40 positioniert ist. Die Führungsringe 49, 59 dienen einer koaxialen gleitenden Führung des Kolbens 50 entlang der Längsachse X-X in dem Gehäuse 40.

Auf der zweiten Seite 42 des Gehäuses 40 ist der Schnellanschluss 2 angeordnet. Der Schnellanschluss 2 umfasst ein erstes Teil 10 und ein zweites Teil 20, wobei in dem dargestellten Ausführungsbeispiel das erste Teil 10 mit dem Deckel 60 mittels einer Schraube 69 verbunden ist. Alternativ können das erste Teil 10 und der Deckel 60 einteilig ausgebildet sein.

Das erste Teil 10 und das zweite Teil 20 sind dazu eingerichtet, eine formschlüssige Verbindung herzustellen, durch welche die Gasdruckfeder 1 in einer Gasdruckfederaufnahme 4, siehe Figur 2, an einer Maschine oder einem Werkzeug 3 befestigt werden kann, und wobei die formschlüssige Verbindung eingerichtet ist, hohen mechanischen und dynamischen Belastungen, die bei der Verwendung der Maschine oder des Werkzeugs 3 entstehen, standzuhalten. Das zweite Teil 20 kann hierzu, wie in Figur 2 dargestellt ist, mittels einer Montageschraube 5 an einem Boden der Gasdruckfederaufnahme 4 einer Maschine 3 oder eines Werkzeugs 3 befestigt werden.

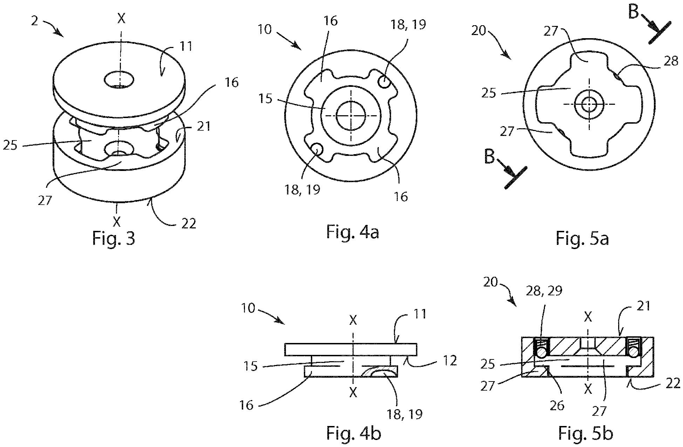

Wie insbesondere den Figuren 4a und 4b zu entnehmen ist, umfasst das erste Teil 10 eine erste Stirnseite 11 und eine zweite Stirnseite 12, wobei auf der zweiten Stirnseite 12 ein Stecker 15 in Form einer kreiszylindrischen Anformung ausgebildet ist, der von der zweiten Stirnseite 12 entlang der Längsachse X-X absteht. Darüber hinaus weist der Stecker 15 - wie Figur 4b zeigt - vier von der Längsachse X-X abstehende Nocken 16 auf, die beabstandet zu der zweiten Stirnseite 12 von dem Stecker 15 in radialer Richtung von der Längsachse X-X abstehen. Die Nocken 16 stehen umfangssymmetrisch verteilt flügelförmig bzw. sichelförmig in der Längsachse X-X von dem Stecker 15 ab und sind punktsymmetrisch zu der Längsachse X-X ausgebildet.

Das zweite Teil 20, welches im Detail in den Figuren 5a und 5b dargestellt ist, umfasst eine erste Stirnseite 21 und eine zweite Stirnseite 22. In die erste Stirnseite 21 ist eine Steckerausnehmung 25 eingearbeitet oder eingeformt, welche sich koaxial zu der Längsachse X-X von der ersten Stirnseite 21 erstreckt. Darüber hinaus weist das zweite Teil vier Hinterschneidung 26 auf, die umfangssymmetrisch um die Längsachse X-X angeordnet sind und durch radial von außen in die Steckerausnehmung 25 hineinragende Stege 27 gebildet werden, wobei die Stege 27 bündig zu der ersten Stirnseite 21 angeordnet sind.

Insbesondere die Explosionszeichnung gemäß Figur 3 zeigt, dass der Stecker 15 und die Steckerausnehmung 25 zueinander korrespondierend ausgebildet sind, wodurch der Stecker 15 in die Steckerausnehmung 25 entlang der Längsachse X-X eingesetzt werden kann. Die Nocken 16 werden dabei zwischen jeweils zwei benachbarten Stegen 27 des zweiten Teils 20 durchgeführt, wobei der Abstand zwischen zwei benachbarten Stegen 27 mindestens einer Breite einer Nocke 16 entspricht.

Die Hinterschneidung 26 sowie die Nocken 16 sind weiterhin derart aufeinander abgestimmt ausgebildet, dass nach dem Einsetzen des Steckers 15 in die Steckerausnehmung 25 das erste Teil 10 und das zweite Teil 20 relativ zueinander um die Längsachse X-X in eine Winkellage verdreht werden können, wodurch eine formschlüssige Verbindung zwischen dem ersten Teil 10 und dem zweiten Teil 20 nach Art eines Bajonettverschlusses gebildet ist. In dem dargestellten Ausführungsbeispiel erfolgt zur Herstellung der formschlüssigen Verbindung eine Drehung um die Längsachse X-X um 45° in die Winkellage, wodurch die Stege 27 mit den Nocken 16 zueinander fluchtend angeordnet werden.

Um die Winkellage des ersten Teils 10 und des zweiten Teils 20 zu fixieren, umfasst der Schnellanschluss 2 ein erstes Feststellmittel 18 und ein zweites Feststellmittel 28, wobei das erste Feststellmittel 18 an dem ersten Teil 10 angeordnet ist und das zweite Feststellmittel 28 an dem zweiten Teil 20.

Das erste Feststellmittel 18 muss mindestens eine Rastaussparung 19 aufweisen, die auf der von der zweiten Stirnseite 12 abgewandten Seite in die Nocke 16, wie in Figur 4a dargestellt ist, eingearbeitet oder eingeformt ist.

Das zweite Feststellmittel 28 muss mindestens eine elastisch bewegliche Rastnase 29 aufweisen, welche als eine Federkugel ausgebildet ist. Derartige Federkugeln sind hinlänglich aus dem Stand der Technik vorbekannt und umfassen ein Federelement und eine als Kugel ausgebildete Rastnase 29, welche im dargestellten Ausführungsbeispiel parallel zu der Längsachse X-X federbeweglich gehalten ist.

Die Rastnase 29 des zweiten Feststellmittels 28 ragt in die Steckerausnehmung 25 und muss wie in dem dargestellten Ausführungsbeispiel in der Hinterschneidung 26 angeordnet sein.

Die Position des ersten Feststellmittels 18 und des zweiten Feststellmittels 28 korrespondieren zueinander, so dass die Rastnase 29 und die Rastaussparung 19 in der Winkellage ineinandergreifen und die Winkellage zwischen dem ersten Teil 10 und dem zweiten Teil 20 arretiert ist. Beim Eingreifen der Rastnase 29 in die Rastaussparung 19 kann ein haptisch wahrnehmbares Signal erzeugt werden, wodurch eine ordnungsgemäße Fixierung der Gasdruckfeder 1 signalisiert werden kann.

Darüber hinaus kann an dem ersten Teil 10 oder dem zweiten Teil 20 ein (nicht dargestellter) Anschlag vorgesehen sein, durch den die Winkellage zwischen dem ersten Teil 10 und dem zweiten Teil 20 vorgegeben wird. Auch kann vorgesehen sein, dass die Nocken 16 nicht umfangssymmetrisch um die Längsachse X-X angeordnet sind bzw. die Stege 27 zur Bildung der Hinterschneidung 26 nicht umfangssymmetrisch um die Längsachse X-X angeordnet sind, oder die Nocken 16 bzw. die Hinterschneidung 26 asymmetrisch ausgebildet sind, wodurch eine Lageorientierung zwischen dem ersten Teil 10 und dem zweiten Teil 20 bewerkstelligt werden kann.

### Bezugszeichenliste

- 1: Gasdruckfeder
- 2: Schnellanschluss
- 3: Maschine oder Werkzeug
- 4: Gasdruckfederaufnahme
- 5: Montageschraube
- 8: Gaskompressionskammer
- 10: erstes Teil
- 11: erste Stirnseite von 10
- 12: zweite Stirnseite von 10
- 15: Stecker
- 16: Nocke
- 18: erstes Feststellmittel
- 19: Rastaussparung
- 20: zweites Teil
- 21: erste Stirnseite von 20
- 22: zweite Stirnseite von 20
- 25: Steckerausnehmung
- 26: Hinterschneidung
- 27: Steg
- 28: zweites Feststellmittel
- 29: Rastnase
- 40: Gehäuse
- 41: erste Seite von 40
- 42: zweite Seite von 40
- 43: Abstreifer
- 45: Zylinderbohrung
- 46: Wandung
- 47: Dichtung
- 48: Öffnung
- 49: Führungsring
- 50: Kolben
- 55: Kolbenstange
- 58: Kammer
- 59: Führungsring
- 60: Deckel
- 69: Schraube

## Patentansprüche

1. Gasdruckfeder (1) mit wenigstens einem Schnellanschluss (2) umfassend:
- ein erstes Teil (10) mit einem Stecker (15) und mindestens einer Nocke (16), und
- ein zweites Teil (20) mit einer Steckerausnehmung (25) und mindestens einer Hinterschneidung (26),
- wobei der Stecker (15) in die Steckerausnehmung einsetzbar ist, und durch eine Drehung um eine Längsachse (X-X) des ersten Teils (10) und des zweiten Teils (20) relativ zueinander die wenigstens eine Nocke (16) die mindestens eine Hinterschneidung (26) zum formschlüssigen Verbinden nach Art eines Bajonettverschlusses in einer Winkellage hintergreift,
**dadurch gekennzeichnet, dass**
- wenigstens ein erstes Feststellmittel (18) und wenigstens ein zweites Feststellmittel (28) vorgesehen sind, und dass das wenigstens eine erste Feststellmittel (18) und das wenigstens eine zweite Feststellmittel (28) die Winkellage des ersten Teils (10) und des zweiten Teils (20) in der formschlüssigen Verbindung der Nocke (16) und der Hinterschneidung (26) arretieren,
- wobei das wenigstens eine erste Feststellmittel (18) an dem ersten Teil (10) und das wenigstens eine zweite Feststellmittel (28) an dem zweiten Teil (20) angeordnet ist,
- wobei das wenigstens eine erste Feststellmittel (18) eine Rastaussparung (19) aufweist, und dass das wenigstens eine zweite Feststellmittel (28) eine elastisch bewegliche Rastnase (29) umfasst,
- wobei die wenigstens eine Nocke (16) das wenigstens eine erste Feststellmittel (18) aufweist,
- wobei die elastisch bewegliche Rastnase (29) als eine Federkugel ausgebildet ist und ein Federelement und eine als Kugel ausgebildete Rastnase (29) umfasst, welche parallel zu der Längsachse (X-X) federbeweglich gehalten ist, und
- wobei die Rastnase (29) des zweiten Feststellmittels (28) in die Steckerausnehmung (25) ragt und in der Hinterschneidung (26) angeordnet ist.

2. Gasdruckfeder (1) nach einem der vorgenannten Ansprüche,
**dadurch gekennzeichnet, dass**
ein mindestens ein Betätigungsmittel vorgesehen ist, durch das die Rastverbindung zwischen dem wenigstens einen ersten Feststellmittel (18) und dem wenigstens einen zweiten Feststellmittel (28) unterbrochen ist.

3. Gasdruckfeder (1) nach einem der vorgenannten Ansprüche,
**dadurch gekennzeichnet, dass**
wenigstens zwei Hinterschneidungen (26) und/oder wenigstens zwei Nocken (16) vorgesehen sind, die symmetrisch zu einer Längsachse (X-X) ausgebildet und/oder angeordnet sind.

4. Gasdruckfeder (1) nach einem der vorgenannten Ansprüche,
**dadurch gekennzeichnet, dass**
wenigstens zwei Hinterschneidungen (26) und/oder wenigstens zwei Nocken (16) vorgesehen sind, die asymmetrisch zu einer Längsachse (X-X) ausgebildet und/oder angeordnet sind.

5. Gasdruckfeder (1) nach einem der vorgenannten Ansprüche,
**dadurch gekennzeichnet, dass**
mindestens ein Anschlag vorgesehen ist, durch den die Winkellage vorgegeben ist.

6. Gasdruckfeder (1) nach einem der vorgenannten Ansprüche,
**dadurch gekennzeichnet, dass**
das erste Teil (10) und/oder das zweite Teil (20) mit einem Stößel oder einem Deckel insbesondere einteilig verbunden ist bzw. sind.

7. Gasdruckfeder (1) nach einem der vorgenannten Ansprüche,
**dadurch gekennzeichnet, dass**
der Stecker (15) und/oder die Steckerausnehmung (25) Zentriermittel aufweisen.

8. Maschine oder Werkzeug (3) mit wenigstens einer Gasdruckfeder nach einem der vorgenannten Ansprüche.

9. Maschine oder Werkzeug (3) nach Anspruch 8,
**dadurch gekennzeichnet, dass**
wenigstens eine Gasdruckfederaufnahme (4) vorgesehen ist, in die das erste Teil (10) und/oder das zweite Teil (20) vollständig eingelassen ist.

## Claims

1. Gas pressure spring (1), having at least one quick connection (2), comprising:
- a first part (10), having a plug (15) and at least one cam (16), and
- a second part (20), having a plug recess (25) and at least one undercut (26),
- wherein the plug (15) is insertable into the plug recess (25) and, by means of a rotation around a longitudinal axis (X-X) of the first part (10) and the second part (20) relative to each other, the at least one cam (16) engages in an angular orientation behind the at least one undercut (26) to form a positively locking connection in the manner of a bayonet fitting,
**characterized in that**
- at least one first locking means (18) and at least one second locking means (28) are provided, and **in that** the at least one first locking means (18) and the at least one second locking means (28) lock the angular orientation of the first part (10) and the second part (28) in the positively locking connection of the cam (16) and the undercut (26),
- wherein the at least one first locking means (18) is arranged on the first part (10), and the at least one second locking means (28) is arranged on the second part (20),
- wherein the at least one first locking means (18) comprises a detent recess (19), and **in that** the at least one second locking means (28) includes an elastically moveable detent lug (29),
- wherein the at least one cam (16) comprises the at least one first locking means (18),
- wherein the elastically moveable detent lug (29) is implemented as a suspension sphere and includes a spring element and a detent lug (29), implemented as a sphere, which is spring-moveably held parallel to the longitudinal axis (X-X), and
- wherein the detent lug (29) of the second locking means (28) extends into the plug recess (25) and is arranged in the undercut (26).

2. Gas pressure spring (1) in accordance with claim 1,
**characterized in that**
at least one actuating means is provided, by means of which the detent connection between the at least one first locking means (18) and the at least one second locking means (28) is disconnected.

3. Gas pressure spring (1) in accordance with either of the preceding claims,
**characterized in that**
at least two undercuts (26) and/or at least two cams (16) are provided, which are formed and/or arranged symmetrically to a longitudinal axis (X - X).

4. Gas pressure spring (1) in accordance with any of the preceding claims,
**characterized in that**
at least two undercuts (26) and/or at least two cams (16) are provided, which are formed and/or arranged asymmetrically to a longitudinal axis (X - X).

5. Gas pressure spring (1) in accordance with any of the preceding claims,
**characterized in that**
at least one abutment is provided, by means of which the angular orientation is defined.

6. Gas pressure spring (1) in accordance with any of the preceding claims,
**characterized in that**
the first part (10) and/or the second part (20) is(are), in particular integrally, connected to a plunger or to a cover.

7. Gas pressure spring (1) in accordance with any of the preceding claims,
**characterized in that** the plug (15) and/or the plug recess (25) comprise(s) centering means.

8. Machine or tool (3) having at least one gas pressure spring in accordance with any of the preceding claims.

9. Machine or tool (3) in accordance with claim 8,
**characterized in that**
at least one gas pressure spring seat (4) is provided, in which the first part (10) and/or the second part (20) is entirely embedded.

## Revendications

1. Ressort à gaz (1) ayant un raccord rapide (2) comprenant :
- une première partie (10) avec un connecteur (15) et au moins une came (16), et
- une seconde partie (20) avec un évidement de connecteur (25) et au moins une contredépouille (26),
- le connecteur (15) se plaçant dans l'évidement de connecteur et par une rotation l'une par rapport à l'autre autour de l'axe longitudinal (X-X) de la première partie (10) et de la seconde partie (20), au moins la came (16) vient prendre derrière au moins une contredépouille (26) pour réaliser une liaison par la forme de type raccord baïonnette dans une position angulaire,
**caractérisé par**
- au moins un premier moyen de fixation (18) et au moins un second moyen de fixation (28), et
- au moins le premier moyen de fixation (18) et au moins le second moyen de fixation (28) bloquent la position angulaire de la première partie (10) et de la seconde partie (20) dans la liaison par la forme de la came (16) et de la contredépouille (26),
- le premier moyen de fixation (18) étant sur la première partie (10) et le second moyen de fixation (28) étant sur la seconde partie (20),
- le premier moyen de fixation (18) a un évidement d'accrochage (19) et le second moyen de fixation (28) a un bec d'accrochage (29) mobile élastiquement,
- la came (16) comporte le premier moyen de fixation (18),
- le bec d'accrochage (29) élastique est réalisé comme bille à ressort comprenant un ressort et un bec d'accrochage (29) en forme de bille, qui est tenue de façon mobile élastiquement parallèlement à l'axe longitudinal (X-X), et
- le bec d'accrochage (29) du second moyen de fixation (28) vient en saillie dans l'évidement de connecteur (25) et dans la contredépouille (26).

2. Ressort à gaz (1) selon la revendication précédente,
**caractérisé par**
au moins un moyen d'actionnement qui ouvre la liaison d'accrochage entre au moins le premier moyen de fixation (18) et au moins le second moyen de fixation (28).

3. Ressort à gaz (1) selon l'une des revendications précédentes,
**caractérisé par**
au moins deux contredépouilles (26) et/ou au moins deux cames (16) qui sont réalisées et/ou disposées de manière symétrique par rapport à un axe longitudinal (X-X).

4. Ressort à gaz (1) selon l'une des revendications précédentes,
**caractérisé par**
au moins deux contredépouilles (26) et/ou au moins deux cames (16) qui sont réalisées et/ou disposées de manière asymétrique par rapport à un axe longitudinal (X-X).

5. Ressort à gaz (1) selon l'une des revendications précédentes,
**caractérisé par**
au moins une butée qui prédéfinit la position angulaire.

6. Ressort à gaz (1) selon l'une des revendications précédentes,
**caractérisé en ce que**
la première partie (10) et/ou la seconde partie (20) sont reliées à un poussoir ou à un couvercle notamment en une seule pièce.

7. Ressort à gaz (1) selon l'une des revendications précédentes,
**caractérisé en ce que**
le connecteur (15) et/ou l'évidement de connecteur (25) comportent des moyens de centrage.

8. Machine ou outil (3) comportant au moins un ressort à gaz selon l'une des revendications précédentes.

9. Machine ou outil (3) selon la revendication 8,
**caractérisée par**
au moins un logement de ressort à gaz (4) recevant de manière complète la première partie (10) et/ou la seconde partie (20).
